# EUROPÄISCHE PATENTSCHRIFT

(11) **EP 3 663 105 B1**
(45) Veröffentlichungstag und Bekanntmachung des Hinweises auf die Patenterteilung: **01.09.2021**
(21) Anmeldenummer: 19203731.5
(22) Anmeldetag: 17.10.2019
(51) Int. Cl.: B60C 11/03, B60C 11/13

(54) **FAHRZEUGREIFEN**
VEHICLE TYRES
PNEU DE VÉHICULE

(30) Priorität: 04.12.2018 DE 102018220894
(43) Veröffentlichungstag der Anmeldung: 10.06.2020
(73) Patentinhaber: Continental Reifen Deutschland GmbH, 30165 Hannover (DE)
(72) Erfinder: Bosse, Stefan, 30419 Hannover (DE)
(74) Vertreter: Continental Corporation

(56) Entgegenhaltungen:
- EP-A1- 1 506 884
- EP-A1- 2 913 203
- EP-A1- 3 178 669
- JP-A- 2012 020 702

## Beschreibung

Die Erfindung betrifft einen Fahrzeugreifen - insbesondere PKW-Fahrzeugreifens - mit drehrichtungsgebundenem Laufstreifenprofil mit wenigstens zwei in axialer Richtung A nebeneinander angeordneten, über den Umfang des Fahrzeugluftreifens erstreckten Profilbändern die durch eine Umfangsrille voneinander getrennt sind, wobei die Profilbänder in radialer Richtung R nach außen hin von einer die Bodenkontaktfläche bildenden radial äußeren Oberfläche und die Umfangsrille nach radial innen hin von einem Rillengrund und axial beiderseits des Rillengrundes jeweils von einer Rillenwand begrenzt werden, wobei jedes der beiden Profilbänder in axialer Richtung zur Umfangsrille hin durch eine Profilbandflanke, welche die zu diesem Profilband hin weisend angeordnete Rillenwand bildet, begrenzt wird, wobei in wenigstens einer dieser die Umfangsrille begrenzenden Profilbandflanken über den Umfang des Fahrzeugreifens verteilt hintereinander angeordnete steg- oder rippenförmige Versteifungselemente ausgebildet sind, welche sowohl in der Profilbandflanke als auch im Rillengrund angebunden sind und welche ausgehend von der Profilbandflanke in die Umfangsrille hinein erstreckt sind und in der Umfangsrille mit Abstand a zur anderen, die Umfangsrille begrenzenden Profilbandflanke enden, wobei die Versteifungselemente mit ihrer ausgehend von der Profilbandflanke bis zu ihrem Erstreckungsende gebildeten Längserstreckung unter Einschluss eines Neigungswinkels α zur axialen Richtung A des Fahrzeugreifens ausgerichtet sind.

Derartige Fahrzeugluftreifen sind bekannt.

Es ist bekannt, Fahrzeugluftreifen mit in axialer Richtung voneinander benachbarten Profilbändern, wie z.B. Profilblockreihen oder Umfangsrippen auszubilden, die jeweils durch über den Umfang des Fahrzeugluftreifens erstreckte Umfangsrillen axial voneinander getrennt sind. Die Umfangsrillen sollen dabei die Aufnahme und den Abfluss von Wasser beim Abrollen auf der Straße ermöglichen, die Profilbänder bewirken über ihre Kontaktfläche zur Straßenoberfläche und ggfs. zusätzlich eingearbeitete Griffkanten den zur Kraftübertragung erforderlichen Bodenkontakt. Zur sicheren und zuverlässigen Kraftübertragen von Seitenkräften und somit zur Ermöglichung von besonders guten Handling-Eigenschaften ist es wünschenswert, die Profilbänder in axialer Richtung des Fahrzeugluftreifens mit hoher Steifigkeit auszubilden. Dies kann durch die Ausbildung von besonders breiten Profilbändern ermöglicht werden. Eine besonders breite Ausbildung von Profilbändern reduziert jedoch wiederum die Möglichkeit der Aufnahme von Wasser und deren Ableitung in Umfangsrichtung. Zum Einsatz auf schneebedeckten Straßen ist es zusätzlich wünschenswert, eine besonders gute Haftübertragung auf Schnee zur Erzielung guter Brems- und Traktionseigenschaften auf Schnee zu ermöglichen.

Aus der EP 2 540 526 A1 ist es bekannt, Profilbänder durch Umfangsrillen in axialer Richtung getrennt voneinander auszubilden. Dabei sind im nahen Rillengrundbereich zusätzliche Gummielemente ausgebildet, die sich von der jeweiligen Profilblockelementflanke unter kontinuierlich abnehmender Höhe bis zum Rillengrund erstrecken und im Rillengrund enden. Diese Gummielemente erstrecken sich dabei von der Profilblockelementflanke ausgehend unter Einschluss eines Neigungswinkels zur axialen Richtung entgegen der Drehrichtung des Fahrzeugluftreifens.

Diese Gummielemente können im unteren Bereich des Profilblockes in gewissen Umfang das Profilblockelement in axialer Richtung stabilisieren und dabei aufgrund ihrer nur gering ausgebildeten Erstreckungshöhe den Wasserabfluss durch die Rille ermöglichen. Die Schneegriffwirkung im Bereich der Umfangsrille ist jedoch auch bei dieser Ausbildung nicht verbessert. Wie bei üblichen - ohne zusätzliche Stützelemente zur axialen Stützung des Profilbandes ausgebildeten - Umfangsrillen ist im Bereich der Umfangsrille über den größten radialen Erstreckungsbereich der Umfangsrille keine besondere Schneegriffwirkung ermöglicht und auch im radial inneren Erstreckungsbereich der Umfangsrille gleitet der Schnee längs der - entgegen der Drehrichtung des Fahrzeugluftreifens - erstreckten Gummielemente in Umfangsrichtung durch die Umfangsrille.

Aus der EP 2 234 824 B1 ist es bekannt, im Bereich von Umfangsrillen gleichmäßig verteilt massiv ausgebildete Steinauswerfer mit pyramidenähnlichen Strukturen auszubilden, die zusätzliche Eindellungen in Richtung Profilband beinhalten. Die Steinauswerfer begünstigen dabei möglicherweise eine Versteifung des Profilbandes in axialer Richtung, wobei sie formbedingt den Wasserdurchfluss eher beeinträchtigen. Die Steinauswerfer ermöglichen durch ihre in die Rille eingreifende pyramidenähnliche Struktur zusätzliche Griffkanten zur Verbesserung des Schneegriffs. Eine zusätzliche Verdichtung des Schnees und dadurch eine zusätzliche Verbesserung des Schnee-Schneegriffs wird durch diese Ausbildung nicht ermöglicht.

Der Erfindung liegt die Aufgabe zugrunde, einen Fahrzeugluftreifen mit durch Umfangsrillen voneinander getrennten Profilbändern mit guten Griffeigenschaften auf trockener, nasser und schneebedeckter Straße sowohl hinsichtlich des Seitengriffs der Profilbänder als auch hinsichtlich des Schneegriffs im Bereich der Umfangsrille zu optimieren bei Aufrechterhaltung von guter Wasserableitung aus dem Laufstreifenprofil.

Die Aufgabe wird erfindungsgemäß durch die Ausbildung eines Fahrzeugreifens - insbesondere eines PKW-Fahrzeugreifens - mit drehrichtungsgebundenem Laufstreifenprofil mit wenigstens zwei in axialer Richtung A nebeneinander angeordneten, über den Umfang des Fahrzeugluftreifens erstreckten Profilbändern die durch eine Umfangsrille voneinander getrennt sind, wobei die Profilbänder in radialer Richtung R nach außen hin von einer die Bodenkontaktfläche bildenden radial äußeren Oberfläche und die Umfangsrille nach radial innen hin von einem Rillengrund und axial beiderseits des Rillengrundes jeweils von einer Rillenwand begrenzt werden, wobei jedes der beiden Profilbänder in axialer Richtung zur Umfangsrille hin durch eine Profilbandflanke, welche die zu diesem Profilband hin weisend angeordnete Rillenwand bildet, begrenzt wird, wobei in wenigstens einer dieser die Umfangsrille begrenzenden Profilbandflanken über den Umfang des Fahrzeugreifens verteilt hintereinander angeordnete steg- oder rippenförmige Versteifungselemente ausgebildet sind, welche sowohl in der Profilbandflanke als auch im Rillengrund angebunden sind und welche ausgehend von der Profilbandflanke in die Umfangsrille hinein erstreckt sind und in der Umfangsrille mit Abstand a zur anderen, die Umfangsrille begrenzenden Profilbandflanke enden, wobei die Versteifungselemente mit ihrer ausgehend von der Profilbandflanke bis zu ihrem Erstreckungsende gebildeten Längserstreckung unter Einschluss eines Neigungswinkels α zur axialen Richtung A des Fahrzeugreifens ausgerichtet sind, gemäß den Merkmalen von Anspruch 1 gelöst, bei dem die von der Profilbandflanke bis zu ihrem Erstreckungsende gebildete Längserstreckung der Versteifungselemente jeweils eine Umfangsrichtungskomponente aufweist, deren Orientierung der Drehrichtung D bei Vorwärtsfahrt des drehrichtungsgebundenen Laufstreifenprofils entspricht.

Durch diese Ausbildung wird mit Hilfe der steg- oder rippenförmig ausgebildeten Versteifungselemente eine zusätzliche axiale Stabilisierung des mit ihnen verbundenen Profilbands und somit eine verbesserte Kraftübertragung zur Übertragung von Seitenkräften und verbesserte Handling-Eigenschaften auch bei schmaler Ausbildung des Profilbandes ermöglicht. Eine gute Aufnahme von Wasser auf nassen Straßen über die Umfangsrillen und deren Ableitung in Umfangsrichtung wird weiter ermöglicht. Die Ausbildung der Erstreckungsrichtung der Versteifungselemente von der Profilbandflanke ausgehend bis zu ihrem Erstreckungsende mit einer Umfangsrichtungskomponente, deren Orientierung der Drehrichtung D bei Vorwärtsfahrt des drehrichtungsgebundenen Laufstreifenprofils entspricht, ermöglicht neben den zusätzlichen Griffkanten zum Griff im Schnee im Bereich der Umfangsrille auch eine Ausbildung von Auffangtaschen zwischen den in Drehrichtung D ausgerichteten Versteifungselementen und der zugehörigen Profilbandflanke, so dass in die Umfangsrille "eindringender Schnee" beim Abrollen in Drehrichtung D in diese ausgebildete Tasche eingepresst und dort verdichtet wird, wodurch sowohl eine zusätzliche Versteifung für das Profilband als auch für das Versteifungselement bewirkt wird, welche bereits eine bessere Griffwirkung in axialer und Umfangsrichtung ermöglicht, als auch durch den eingepresste Schnee zusätzlich eine verbesserte Schnee-Schneegriffwirkung ermöglicht wird. Somit wird bei dieser Ausbildung eine deutlich verbesserte Schneegriffwirkung in axialer und in Umfangsrichtung zu verbesserten Traktions- uns Bremseigenschaften und zur verbesserten Seitenkraftübertragung auf Schnee ermöglicht. Somit werden durch diese Ausbildung bei einem derartigen Laufstreifenprofil mit durch Umfangsrillen voneinander getrennten Profilbändern die Trockengriffeigenschaften, die Nässegriffeigenschaften und die Schneegriffeigenschaften positiv beeinflusst.

Besonders vorteilhaft ist die Ausbildung eines Fahrzeugreifens gemäß den Merkmalen von Anspruch 2, wobei das Versteifungselement mit seiner radialen Erstreckung nach außen hin jeweils in einer Höhe h mit 0,4PT≤h≤0,8PT radial außerhalb des Rillengrundes endet, wobei PT die maximale Rillentiefe ist. Hierdurch kann in einfacher Weise eine hohe Profilsteifigkeit und verbesserte Handling-Eigenschaften bei guten Nass- und Schneegriffeigenschaften besonders wirksam umgesetzt werden.

Besonders vorteilhaft ist die Ausbildung eines Fahrzeugreifens gemäß den Merkmalen von Anspruch 3, wobei der Abstand a mit 0,6B≤a≤0,8B ausgebildet ist, wobei B die Rillenbreite der Umfangsrille ist. Hierdurch können in einfacher Weise gute Aquaplaning- und Schneeeigenschaften weiterhin sicher umgesetzt und dabei dennoch hohe Profilsteifigkeit und somit gute Handling-Eigenschaften des Reifens erzielt werden.

Besonders vorteilhaft ist die Ausbildung eines Fahrzeugreifens gemäß den Merkmalen von Anspruch 4, wobei das Versteifungselement längs seiner Erstreckung ausgehend von der Profilbandflanke bis zu seinem Erstreckungsende mit einer in axialer Richtung A des Fahrzeugreifens gemessenen Erstreckungslänge b mit 0,2B≤b≤0,4B ausgebildet ist. Hierdurch kann in einfacher Weise eine ausreichende Erhöhung der Profilsteifigkeit und somit eine Verbesserung der Handling-Eigenschaften wirksam umgesetzt werden.

Besonders vorteilhaft ist die Ausbildung eines Fahrzeugreifens gemäß den Merkmalen von Anspruch 5, wobei der Neigungswinkels α mit 20°≤α≤45° - insbesondere mit 25°≤α - ausgebildet ist. Der Neigungswinkel ist dabei ausreichend klein gewählt, um eine ausreichend große Tasche auszubilden, in der sich Schnee zur Sicherstellung guter Schnee-Schnee-Verzahnung und somit guter Schneetraktion verfangen kann. Der Neigungswinkel ist dabei ausreichend groß gewählt, dass der in die Tasche eindringende Schnee weitgehend sicher in der Tasche verbleibt und dort eingepresst werden kann ohne vorher in axialer Richtung zur Mitte der Rille wieder abzufließen und dann nicht für die Schnee-Schnee-Traktion zur Verfügung zu stehen. Optimal für das sichere Einfangen des Schnees ist dabei die Ausbildung mit 25°≤α.

Besonders vorteilhaft ist die Ausbildung eines Fahrzeugreifens gemäß den Merkmalen von Anspruch 6, wobei das Versteifungselement längs seiner Erstreckung ausgehend von der Profilbandflanke in radialer Richtung R nach außen hin von einer - insbesondere ebenen - Fläche begrenzt wird, welche längs der Haupterstreckungsrichtung des Versteifungselements ausgehend von der Profilbandflanke unter Einschluss eines Neigungswinkels β zur radialen Richtung R mit 10°≤β≤80° unter kontinuierlicher Abnahme ihrer radialen Position ausgerichtet ist. Hierdurch kann in einfacher Weise ausreichend großer Raum zur sicheren Anlagerung von Schnee in der Schneetasche und somit zur Erzielung guter Schnee-Schnee-Verzahnung umgesetzt werden. Ein sicheres Auffüllen mit Schnee kann sehr wirksam umgesetzt werden.

Besonders vorteilhaft ist die Ausbildung eines Fahrzeugreifens gemäß den Merkmalen von Anspruch 7, wobei diese das Versteifungselement nach radial außen hin begrenzende Fläche an ihrem von der Profilbandflanke wegweisenden Erstreckungsende in den Rillengrund mündet. Hierdurch wird eine sichere Anlagerung von Schnee und dessen Verdichtung und somit eine gute Schnee-Schnee-Verzahnung und Schneetraktion zusätzlich begünstigt.

Besonders vorteilhaft ist die Ausbildung eines Fahrzeugreifens gemäß den Merkmalen von Anspruch 8, wobei die Versteifungselemente der Profilbandflanke gleichmäßig über den Umfang des Reifens verteilt angeordnet sind. Die gleichmäßige Verteilung ermöglicht die Erzielung einer vergleichmäßigten Schneetraktion unter Minimierung von unerwünschten Schlupfeffekten des Reifens. Die Reifengleichförmigkeit (Tire Uniformity) wird dadurch erhöht.

Besonders vorteilhaft ist die Ausbildung eines Fahrzeugreifens gemäß den Merkmalen von Anspruch 9, wobei auch in der zweiten die Umfangsrille begrenzenden Profilbandflanke derartige über den Umfang des Fahrzeugreifens verteilt hintereinander angeordnete steg- oder rippenförmige Versteifungselemente ausgebildet sind. Durch die hierdurch erzielte Reihenanordnung wird beim Kontakt des Reifens mit der schneebedeckten Fahrbahn in immer wieder besonders wirksam Schnee in Versteifungselemente und die dadurch gebildeten Taschen gepresst. Hierdurch kann eine höhere Kraft vom Reifen auf die Fahrbahn übertragen werden kann.

Besonders vorteilhaft ist die Ausbildung eines Fahrzeugreifens gemäß den Merkmalen von Anspruch 10, wobei längs der Umfangserstreckung des Fahrzeugreifens in alternierender Abfolge Versteifungselemente der einen Profilbandflanke und Versteifungselemente der zweiten Profilbandflanke hintereinander angeordnet sind. Durch die alternierende Anordnung wird Schnee, der vom Versteifungselement in Rille rutscht von dem gegenüberliegenden alternierten Versteifungselement aufgenommen. Dies erhöht die Effektivität der nutzbaren Schnee-Schnee-Verzahnung

Die Erfindung wird im Folgenden an Hand der in den Figuren 1 bis 4 dargestellten Ausführungsbeispiele näher erläutert. Hierin zeigen
- Fig.1: einen Abschnitt eines drehrichtungsgebundenen Laufstreifenprofils des Fahrzeugluftreifens eines Personenkraftwagens (Pkw),
- Fig.2: das Laufstreifenprofil von Fig.1 in Schnittdarstellung gemäß Schnitt II-II von Fig.1,
- Fig.3: das Laufstreifenprofil von Fig.1 in Schnittdarstellung gemäß Schnitt III-III von Fig.1 und
- Fig.4: einen Ausschnitt eines Laufstreifenprofils analog zu Fig.1 in alternativer Ausbildung.

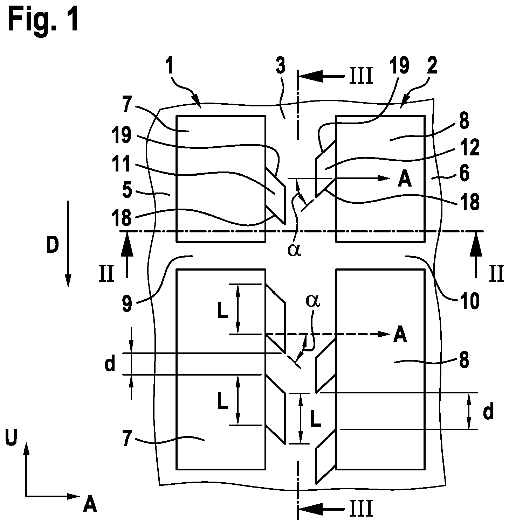

Fig.1 zeigt einen Abschnitt eines drehrichtungsgebundenen Laufstreifenprofils eines Fahrzeugluftreifens eines Personenkraftwagens (Pkw) bekannter Art, bei dem mehrere über den Umfang des Fahrzeugluftreifens erstreckte und in Umfangsrichtung U des Fahrzeugluftreifens ausgerichtete und in axialer Richtung A des Fahrzeugluftreifens voneinander beabstandete Profilbänder ausgebildet sind.

Fig.1 zeigt dabei zwei in axialer Richtung A des Fahrzeugluftreifens nebeneinander ausgebildete Profilbänder, welche als Profilblockreihen 1 bzw. 2 bekannter Art ausgebildet sind. Die Profilblockreihen 1 und 2 sind in bekannter Weise durch eine über den Umfang des Fahrzeugluftreifens erstreckte und in Umfangsrichtung U ausgerichtete Umfangsrille 3 axial voneinander beabstandet. Die Profilblockreihe 1 ist zu ihrer von der Umfangsrille 3 wegweisenden Seite in axialer Richtung A durch eine weitere Umfangsrille 5 bekannter Art begrenzt. Die Profilblockreihe 2 ist zu ihrer in axialer Richtung A von der Umfangsrille 3 wegweisenden Seite ebenfalls durch eine weitere Umfangsrille 6 begrenzt. Die Profilblockreihe 1 ist aus einer Vielzahl von in Umfangsrichtung U des Fahrzeugluftreifens hintereinander angeordneten und jeweils durch Querrillen 9 voneinander beabstandeten Profilblockelementen 7 ausgebildet. Die Profilblockreihe 2 ist in analoger Weise aus einer Vielzahl von in Umfangsrichtung U des Fahrzeugluftreifens hintereinander angeordneten und jeweils durch Querrillen 10 voneinander getrennten Profilblockelementen 8 ausgebildet. Die Querrillen 9 erstrecken sich dabei in axialer Richtung A ausgehend von der Umfangsrille 5 bis in die Umfangsrille 3 hinein. Die Querrillen 10 erstrecken sich ausgehend von der Umfangsrille 3 bis in die Umfangsrille 6 hinein.

Die Profilblockelemente 7 und 8 und somit die Profilblockreihen 1 und 2 sind in radialer Richtung R des Fahrzeugluftreifens nach außen hin jeweils durch eine radial äußere Oberfläche 13, welche die Bodenkontaktoberfläche des Profilblockelementes bildet und Teil der Bodenkontaktoberfläche des Fahrzeugluftreifens ist, begrenzt.

Die Profilblockelemente 7 sind in axialer Richtung A zur Umfangsrille 3 hin jeweils durch Profilblockelementflanken 14 begrenzt, welche die Profilblockelementflanke der Profilblockreihe 1 und die die Umfangsrille 3 in axialer Richtung A zur Profilblockreihe 1 hin begrenzende Rillenwand bilden. Die Profilblockelemente 8 sind in axialer Richtung A zur Umfangsrille 3 hin in bekannter Weise durch Profilblockelementflanken 15 begrenzt, welche die Profilblockelementflanke der Profilblockreihe 2 und die die Umfangsrille 3 in axialer Richtung A zur Profilblockreihe 2 hin begrenzende Rillenwand bildet. Die Umfangsrille 3 ist in radialer Richtung R des Fahrzeugluftreifens nach innen hin durch einen über den Umfang des Fahrzeugluftreifens erstreckten Rillengrund 16 begrenzt. Die Profilblockelementflanken 14 und somit die die Umfangsrille 3 zur Profilblockreihe 1 hin begrenzende Rillenwand erstrecken sich in radialer Richtung R ausgehend von der radial äußeren Oberfläche 13 in radialer Richtung nach innen hin bis zum Rillengrund 16. In analoger Weise erstrecken sich die Profilblockelementflanken 15 und somit die die Umfangsrille 3 zur Profilblockreihe 2 hin begrenzende Rillenwand in radialer Richtung R ausgehend von der radial äußeren Oberfläche 13 nach innen hin bis zum Rillengrund 16. Der Übergang zwischen Profilblockelementflanke 14 zum Rillengrund 16 sowie der Profilblockelementflanke 15 zum Rillengrund 16 hin ist abgerundet ausgebildet.

In analoger Weise sind die Querrillen 9 und 10 in radialer Richtung nach innen hin durch einen Rillengrund und in Umfangsrichtung hin jeweils durch Rillenwände begrenzt, welche jeweils eine das angrenzende Profilblockelement 7 bzw. 6 in Umfangsrichtung begrenzende Profilblockelementflanke bildet. Die Umfangsrille 3 ist in der radialen Position der radial äußeren Oberfläche 13 mit einer in axialer Richtung A des Fahrzeugluftreifens gemessenen Breite B und mit einer zwischen radial äußerer Oberfläche 13 und Rillengrund 16 gemessenen radialer Richtung gemessenen Tiefe_{PT}, welche die Profiltiefe des Fahrzeugluftreifens bildet, ausgebildet.

Wie in den Figuren 1 bis 3 zu erkennen ist, sind über den Umfang des Fahrzeugluftreifens verteilt in der Umfangsrille 3 in Umfangsrichtung U des Fahrzeugluftreifens hintereinander angeordnet steg- oder rippenförmige Stützelemente 11 ausgebildet, die sich jeweils von der Flanke 14 der Profilblockelemente 7 ausgehend mit ihrer steg- bzw. rippenförmigen Längserstreckung in die Umfangsrille 3 hinein erstrecken und im Abstand b von der Flanke 14 und im Abstand a von der Flanke 15 der gegenüberliegenden Profilblockelemente 8 erstrecken und dort enden. Wie in den Figuren 1, 2 und 3 dargestellt ist, sind diese steg- bzw. rippenförmigen Stützelemente 11 in radialer Richtung R nach außen hin durch eine Stützelementdeckfläche 17 und in Umfangsrichtung U zur einen Seite hin durch ein Stützelementflanke 18 und zur anderen Seite hin durch eine Stützelementflanke 19 begrenzt. Die Stützelementflanken 18 und 19 erstrecken sich dabei in radialer Richtung R vom Rillengrund ausgehend nach außen bis zur Stützelementdeckfläche 17 und enden dort.

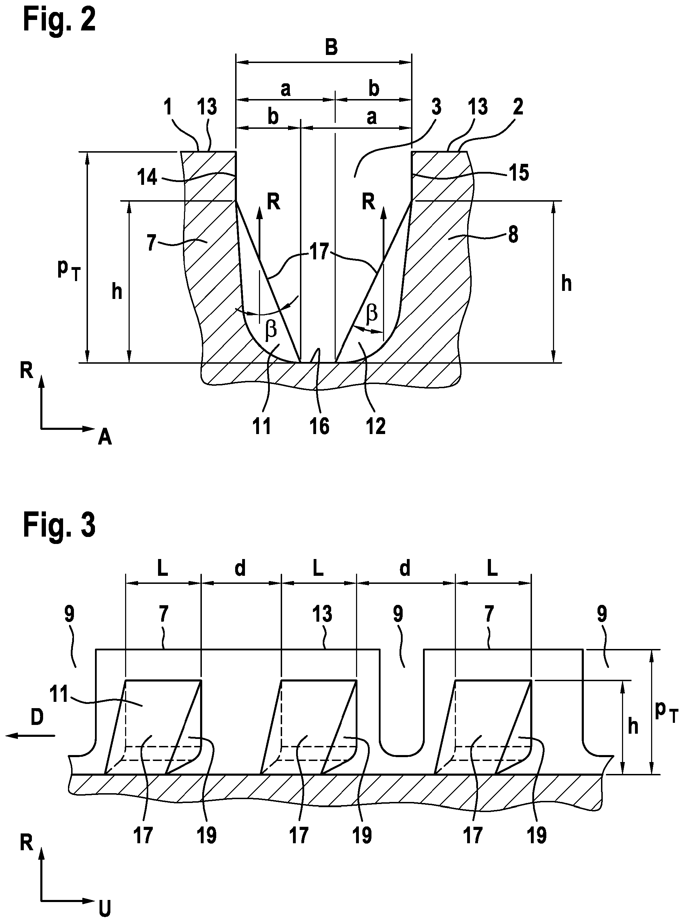

Wie in den Figuren 1 bis 3 zu erkennen ist, ist die Stützelementdeckfläche 17 eine im Wesentlichen eben ausgebildete Deckfläche, welche in den Schnittebenen, die die Reifenachse beinhalten, längs der Erstreckung des jeweiligen Stützelementes 11 in axialer Richtung A ausgehend von der Flanke 14 unter Einschluss eines Neigungswinkels β zur radialen Richtung R geneigt ausgebildet sind. Der Winkel ß ist dabei mit 10°≤ß≤80° ausgebildet. Beispielsweise ist der Winke ß - wie in Fig. 2 dargestellt ist - mit ß = 20° ausgebildet. Die Neigungsrichtung ist dabei so gewählt, dass die Stützelementdeckfläche 17 ausgehend von der Position ihrer maximalen Erstreckungshöhe h oberhalb des Rillengrunde 16, welche die Stützelementfläche 17 in ihrer Schnittposition mit der Flanke 14 einnimmt, längs ihrer axialen Erstreckung in Richtung zur gegenüberliegender Stützfläche 15 kontinuierlich in ihrer radialen Erstreckungshöhe abnimmt und im Abstand b von der Profilblockelementflanke 14 den Rillengrund 16 schneidet.

Die Stützelementflanken 18 und 19 sind im Wesentlichen, wie in Fig. 1 dargestellt ist, parallel zueinander in Erstreckungsrichtung des Stützelementes 11 ausgerichtet.

Die Stützelemente 11 sind ausgehend von der Profilblockelementflanke 14 längs ihrer axialen Erstreckung in Richtung zur Profilblockelementflanke 15 hin mit ihrer gesamten Erstreckung bis in Abstand b von der Profilblockelementflanke 14 geradlinig erstreckt und unter Einschluss eines Neigungswinkels α zur axialen Richtung A ausgerichtet. Dabei ist die Neigungsrichtung zur axialen Richtung A derart gewählt, dass die Erstreckungsrichtung des Stützelementes 11 ausgehend von der Profilblockelementflanke 14 längs seiner Erstreckung in Richtung zur Profilblockelementflanke 15 mit ihrer Umfangsrichtungskomponente in Drehrichtung D des laufrichtungsgebundenen Fahrzeugluftreifens bei Vorwärtsfahrt orientiert ist. Die Drehrichtung D ist in den Figuren 1 und 3 eingezeichnet. Die Stützelemente 11 sind mit einer in der Schnittlinie der Stützelementoberfläche 17 mit dem Rillengrund 16 in Umfangsrichtung U gemessenen Erstreckungslänge L ausgebildet. Die Erstreckungslänge L ist im Wesentlichen längs der gesamten axialen Erstreckung der Stützelementoberfläche 17 bis hin zur Profilblockelementflanke 14 konstant ausgebildet.

In Umfangsrichtung hintereinander angeordnete, benachbarte Versteifungselemente 11 sind - wie in Fig. 1 dargestellt ist - mit einem in Umfangsrichtung U ausgebildetem Abstand d zueinander ausgebildet.

Analog zur Ausbildung von Stützelementen 11, welche an den Profilblockelementflanken 14 der Profilblockelemente 7 und an dem Rillengrund 16 angebunden sind, sind steg- oder rippenförmige Stützelemente 12 an den Profilblockflanken 14 der Profilblockelemente 8 der Profilblockreihe 2 ausgebildet. Die Stützelemente 12 erstrecken sich dabei angebunden an die Profilblockelementflanke 15 und an den Rillengrund 16 ausgehend von der Profilblockelementflanke 15 in axialer Richtung A des Fahrzeugluftreifens in Richtung zur Profilblockelementflanke 14 der gegenüberliegend ausgebildeten Profilblockelemente 7 und enden im Abstand b von der Profilblockelementflanke 15 und im Abstand a von der Profilblockelementflanke 14.

Die Stützelemente 12 sind dabei in radialer Richtung R nach außen hin von einer Stützelementdeckfläche 17 begrenzt, welche in analoger Weise zu der Stützelementdeckfläche 17 der Stützelemente 11 im Wesentlichen eben ausgebildet ist und sich in den Schnittebenen, welche die Achse des Fahrzeugluftreifens beinhalten unter Einschluss eines Neigungswinkels β zur radialen Richtung R geneigt sind. Die Stützelementdeckfläche 17 erstreckt sich dabei ausgehend von der Position ihrer maximalen radialen Erhebung, welche sie in ihrer Schnittlinie mit der Profilblockelementflanke 15 einnimmt und welche der Höhe h entspricht, längs der axialen Erstreckung des Stützelementes 12 in Richtung zur Profilblockelementflanke 14 unter kontinuierlicher Abnahme ihrer Höhe bis in den Abstand b von der Profilblockelementflanke 15 und den Abstand a von der Profilblockelementflanke 14, wo sie den Rillengrund 16 schneidet.

Auch die Stützelemente 12 sind in analoger Weise zu den Stützelementen 11 in Umfangsrichtung U des Fahrzeugluftreifens durch Stützelementflanken 18 und 19, die parallel zueinander ausgerichtet sind und sich in radialer Richtung R ausgehend vom Rillengrund 16 zur Stützelementdeckfläche 17 erstrecken, begrenzt. Auch die Stützelemente 12 sind mit ihrer rippen- oder stegförmigen Längserstreckung ausgehend von der Profilblockelementflanke 15 über ihre gesamte Erstreckung bis zu ihrem Erstreckungsende im Abstand b von der Profilblockelementflanke 15 unter Einschluss eines Neigungswinkels α zur axialen Richtung A geneigt ausgebildet. Dabei ist auch die Erstreckungsrichtung des Stützelementes 12 längs seiner Erstreckung ausgehend von der Profilblockelementflanke 15 in Richtung Profilblockelementflanke 14 so ausgebildet, dass ihre Umfangsrichtungskomponente in Drehrichtung D des Fahrzeugluftreifens orientiert ist.

Die Stützelemente 11 und die Stützelemente 12 sind in analoger Weise zueinander ausgebildet. Wie in Fig. 1 zu erkennen ist, sind die Stützelemente 11 und 12 dabei so positioniert, dass in Umfangsrichtung des Fahrzeugluftreifens jeweils ein Stützelement 11 und dann ein Stützelement 12 in alternierender Abfolge hintereinander angeordnet sind.

Die Erstreckungshöhe h ist mit 0,4P_{T} ≤ h ≤ 0,8P_{T} gewählt. Beispielsweise ist h = 0,7P_{T} ausgebildet.

Die Abstand b und somit die axiale Erstreckungslänge der Stützelemente 11 bzw. 12 ist jeweils mit 0,2 ≤ b ≤ 0,4B ausgebildet. Beispielsweise ist b = 0,3B ausgebildet. Die axiale Erstreckungslänge b bemisst sich dabei bei dem Stützelement 11 in axialer Richtung A ausgehend von der Schnittposition der Profilblockelementflanke 14 mit der radial äußeren Oberfläche 13 bzw. bei dem Stützelement 12 ausgehend von der Schnittposition der Profilblockelementflanke 15 mit der radial äußeren Oberfläche 13 jeweils in axialer Richtung in die Rille hinein bis zum Erstreckungsende des jeweiligen Stützelementes 11 bzw. 12.

Der Abstand a ist jeweils mit 0,6B ≤ a ≤ 0,8 B gewählt und bemisst sich ebenfalls jeweils zwischen dem Erstreckungsende des Stützelementes 11 und der Schnittposition der Profilblockelementflanke 15 mit der radial äußeren Oberfläche 13 bzw zwischen dem Erstreckungsende des Stützelementes 12 und der Schnittposition der Profilblockelementflanke 14 mit der radial äußeren Oberfläche 13.

Wie in Fig. 2 dargestellt ist, ist B = (a+b) .

Der Abstand d ist mit 5mm ≤ d ≤ 15mm, beispielsweise mit d = 10 mm ausgebildet.

Die Erstreckungslänge L ist mit 3mm ≤ L ≤ 8mm, beispielsweise mit L = 5mm ausgebildet.

Im dargestellten Ausführungsbeispiel sind in der Umfangsrille 3 an beiden Profilblockelementflanken 14 und 15 - wie beschrieben und in den Figuren dargestellt - Stützelemente 11 bzw. 12 ausgebildet.

In einer anderen - nicht dargestellten - Ausführung sind lediglich an der Profilblockelementflanke 14 Stützelemente 11 und an der Profilblockelementflanke 15 sind keine Stützelemente ausgebildet.

In einer besonderen Ausführung sind die Stützelemente 11 einer Profilblockelementflanke 14 über den Umfang des Fahrzeugluftreifens im Wesentlichen gleichmäßig hintereinander verteilt angeordnet. In einer weiteren Ausführung sind über den Umfang des Fahrzeugluftreifens die Stützelemente 11 und die Stützelemente 12 jeweils gleichmäßig hintereinander verteilt in alternierender Abfolge ausgebildet.

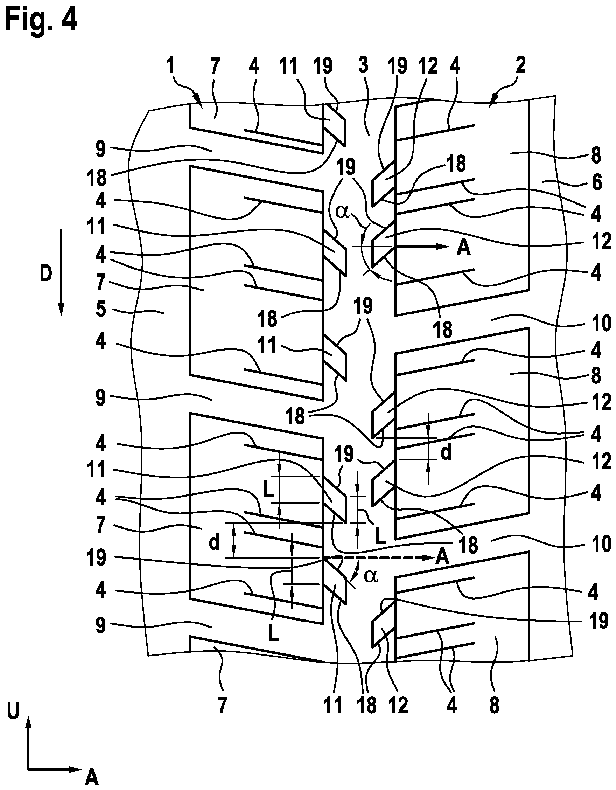

In Fig. 4 ist ein weiteres Ausführungsbeispiel dargestellt, bei welchem gegenüber der Darstellung von Fig. 1 ein etwas vergrößerter Umfangserstreckungsabschnitt mit zusätzlichen Profilblockelementen 7 und 8 dargestellt ist. In Fig. 4 sind dabei in den Profilblockelementen 7 und 8 jeweils in deren radial äußerer Oberfläche 13 in bekannter Weise zusätzliche Feineinschnitte 4 ausgebildet. Die in den Profilblockelementen 7 ausgebildeten Feineinschnitte 4 erstrecken sich ausgehend von der Profilblockelementflanke 14 in bekannter Weise im Wesentlichen in axialer Richtung A des Fahrzeugluftreifens durch die Profilblockreihe 7. In diesem Ausführungsbeispiel ist ein Stützelement 11 jeweils mit Anbindung an die Profilblockelementflanke 14 im Wesentlichen mittig zwischen zwei in Umfangsrichtung U hintereinander angeordneten Feineinschnitten 4 positioniert. In analoger Weise ist jeweils ein Stützelement 12 zwischen zwei Feineinschnitten 4 des Profilblockelementes 8 positioniert.

### Bezugszeichenliste

- 1: Profilblockreihe
- 2: Profilblockreihe
- 3: Umfangsrille
- 4: Feineinschnitt
- 5: Umfangsrille
- 6: Umfagsrille
- 7: Profilblockelement
- 8: Profilblockelement
- 9: Querrille
- 10: Querrille
- 11: Stützelement
- 12: Stützelement
- 13: Radial äußere Oberfläche
- 14: Profilelementflanke
- 15: Profilelementflanke
- 16: Rillengrund
- 17: Stützelementdeckfläche
- 18: Stützelementflanke
- 19: Stützelementflanke

## Patentansprüche

1. Fahrzeugreifen - insbesondere PKW-Fahrzeugreifen - mit drehrichtungsgebundenem Laufstreifenprofil mit wenigstens zwei in axialer Richtung A nebeneinander angeordneten, über den Umfang des Fahrzeugluftreifens erstreckten Profilbändern (1,2) die durch eine Umfangsrille (3) voneinander getrennt sind, wobei die Profilbänder (1,2) in radialer Richtung R nach außen hin von einer die Bodenkontaktfläche bildenden radial äußeren Oberfläche (13) und die Umfangsrille (3) nach radial innen hin von einem Rillengrund (16) und axial beiderseits des Rillengrundes (16) jeweils von einer Rillenwand begrenzt werden, wobei jedes der beiden Profilbänder (1,2) in axialer Richtung A zur Umfangsrille (3) hin durch eine Profilbandflanke (14,15), welche die zu diesem Profilband (1,2) hin weisend angeordnete Rillenwand bildet, begrenzt wird, wobei in wenigstens einer dieser die Umfangsrille (3) begrenzenden Profilbandflanken (14,15) über den Umfang des Fahrzeugreifens verteilt hintereinander angeordnete steg- oder rippenförmige Versteifungselemente (11) ausgebildet sind, welche sowohl in der Profilbandflanke (14) als auch im Rillengrund (16) angebunden sind und welche ausgehend von der Profilbandflanke (14) in die Umfangsrille (3) hinein erstreckt sind und in der Umfangsrille (3) mit Abstand a zur anderen, die Umfangsrille (3) begrenzenden Profilbandflanke (15) enden, wobei die Versteifungselemente (11) mit ihrer ausgehend von der Profilbandflanke (14) bis zu ihrem Erstreckungsende gebildeten Längserstreckung unter Einschluss eines Neigungswinkels α zur axialen Richtung A des Fahrzeugreifens ausgerichtet sind,
**dadurch gekennzeichnet,**
**dass** die von der Profilbandflanke (14) bis zu ihrem Erstreckungsende gebildete Längserstreckung der Versteifungselemente (11) jeweils eine Umfangsrichtungskomponente aufweist, deren Orientierung der Drehrichtung D bei Vorwärtsfahrt des drehrichtungsgebundenen Laufstreifenprofils entspricht.

2. Fahrzeugreifen gemäß den Merkmalen von Anspruch 1,
wobei das Versteifungselement (11) mit seiner radialen Erstreckung nach außen hin jeweils in einer Höhe h mit 0,4PT≤h≤0,8PT radial außerhalb des Rillengrundes (16) endet, wobei PT die maximale Rillentiefe ist.

3. Fahrzeugreifen gemäß den Merkmalen von Anspruch 1 oder 2,
wobei der Abstand a mit 0,6B≤a≤0,8B ausgebildet ist, wobei B die Rillenbreite der Umfangsrille (3) ist.

4. Fahrzeugreifen gemäß den Merkmalen von einem der vorangegangenen Ansprüche,
wobei das Versteifungselement (11) längs seiner Erstreckung ausgehend von der Profilbandflanke (14) bis zu seinem Erstreckungsende mit einer in axialer Richtung A des Fahrzeugreifens gemessenen Erstreckungslänge b mit 0,2B≤b≤0,4B ausgebildet ist, wobei B die Rillenbreite der Umfangsrille (3) ist.

5. Fahrzeugreifen gemäß den Merkmalen von einem oder mehreren der vorangegangenen Ansprüche,
wobei der Neigungswinkels α mit 20°≤α≤45° - insbesondere mit 25°≤α - ausgebildet ist.

6. Fahrzeugreifen gemäß den Merkmalen von einem oder mehreren der vorangegangenen Ansprüche,
wobei das Versteifungselement (11) längs seiner Erstreckung ausgehend von der Profilbandflanke (14) in radialer Richtung R nach außen hin von einer - insbesondere ebenen - Fläche (17) begrenzt wird, welche längs der Haupterstreckungsrichtung des Versteifungselements (11) ausgehend von der Profilbandflanke (14) unter Einschluss eines Neigungswinkels β zur radialen Richtung R mit 10°≤β≤ 80° unter kontinuierlicher Abnahme ihrer radialen Position ausgerichtet ist.

7. Fahrzeugreifen gemäß den Merkmalen von Anspruch 6,
wobei diese das Versteifungselement (11) nach radial außen hin begrenzende Fläche (17) an ihrem von der Profilbandflanke (14) wegweisenden Erstreckungsende in den Rillengrund (16) mündet.

8. Fahrzeugreifen gemäß den Merkmalen von einem oder mehreren der vorangegangenen Ansprüche,
wobei die Versteifungselemente (11) der Profilbandflanke (14,15) gleichmäßig über den Umfang des Reifens verteilt angeordnet sind.

9. Fahrzeugreifen gemäß den Merkmalen von einem oder mehreren der vorangegangenen Ansprüche,
wobei auch in der zweiten die Umfangsrille (3) begrenzenden Profilbandflanke (15) derartige über den Umfang des Fahrzeugreifens verteilt hintereinander angeordnete steg- oder rippenförmige Versteifungselemente (12) ausgebildet sind.

10. Fahrzeugreifen gemäß den Merkmalen von Anspruch 6,
wobei längs der Umfangserstreckung des Fahrzeugreifens in alternierender Abfolge Versteifungselemente (11) der einen Profilbandflanke (14) und Versteifungselemente (12) der zweiten Profilbandflanke (15) hintereinander angeordnet sind.

## Claims

1. Vehicle tyre - in particular a car tyre - with a directional tread profile comprising at least two profile strips (1, 2), which are arranged next to one another in the axial direction A, are made to extend over the circumference of the pneumatic vehicle tyre and are separated from one another by a circumferential groove (3), wherein the profile strips (1, 2) are delimited outwards in the radial direction R by a radially outer surface (13), forming the ground contact area, and the circumferential groove (3) is delimited radially inwards by a groove base (16) and axially on both sides of the groove base (16) respectively by a groove wall, wherein each of the two profile strips (1, 2) is delimited in the axial direction A towards the circumferential groove (3) by a profile strip flank (14, 15), which forms the groove wall arranged facing this profile strip (1, 2), wherein, in at least one of these profile strip flanks (14, 15) delimiting the circumferential groove (3), bar- or rib-shaped stiffening elements (11) are formed, arranged one behind the other such that they are distributed over the circumference of the vehicle tyre, incorporated both in the profile strip flank (14) and in the groove base (16), made to extend from the profile strip flank (14) into the circumferential groove (3) and ending in the circumferential groove (3) at a distance a from the other profile strip flank (15) delimiting the circumferential groove (3), wherein the stiffening elements (11) are aligned with their longitudinal extent, formed from the profile strip flank (14) to the end of their extent, so as to include an angle of inclination α in relation to the axial direction A of the vehicle tyre,
**characterized**
**in that** the longitudinal extent of the stiffening elements (11) formed from the profile strip flank (14) to the end of their extent respectively has a circumferential directional component of an orientation corresponding to the direction of rotation D during forward travel of the directional tread profile.

2. Vehicle tyre according to the features of Claim 1, wherein the stiffening element (11) ends with its radial extent in the outward direction respectively at a height h, with 0.4PT≤h≤0.8PT, radially outside the groove base (16), where PT is the maximum groove depth.

3. Vehicle tyre according to the features of Claim 1 or 2,
wherein the distance a is formed with 0.6B≤a≤0.8B, where B is the groove width of the circumferential groove (3).

4. Vehicle tyre according to the features of one of the preceding claims,
wherein the stiffening element (11) is formed along its extent from the profile strip flank (14) to the end of its extent with a length of extent b, measured in the axial direction A of the vehicle tyre, with 0.2B≤b≤0.4B, where B is the groove width of the circumferential groove (3).

5. Vehicle tyre according to the features of one or more of the preceding claims,
wherein the angle of inclination α is formed with 20°≤α≤ 45° - in particular with 25°≤α.

6. Vehicle tyre according to the features of one or more of the preceding claims,
wherein the stiffening element (11) is delimited along its extent from the profile strip flank (14) outwards in the radial direction R by a - in particular planar - surface (17), which is aligned along the main direction of extent of the stiffening element (11) from the profile strip flank (14) so as to include an angle of inclination β in relation to the radial direction R, with 10°≤β≤80°, while there is a continuous decrease in its radial position.

7. Vehicle tyre according to the features of Claim 6, wherein this surface (17) delimiting the stiffening element (11) radially outwards merges into the groove base (16) at the end of its extent directed away from the profile strip flank (14).

8. Vehicle tyre according to the features of one or more of the preceding claims,
wherein the stiffening elements (11) of the profile strip flank (14, 15) are arranged such that they are distributed uniformly over the circumference of the tyre.

9. Vehicle tyre according to the features of one or more of the preceding claims,
wherein such bar- or rib-shaped stiffening elements (12), arranged one behind the other such that they are distributed over the circumference of the vehicle tyre, are also formed in the second profile strip flank (15) delimiting the circumferential groove (3).

10. Vehicle tyre according to the features of Claim 6, wherein stiffening elements (11) of the one profile strip flank (14) and stiffening elements (12) of the second profile strip flank (15) are arranged one behind the other in alternating sequence along the circumferential extent of the vehicle tyre.

## Revendications

1. Pneu de véhicule, notamment pneu de voiture, ayant un profil de bande de roulement associé à la direction de rotation, comprenant au moins deux bandes profilées (1, 2) agencées l'une à côté de l'autre dans la direction axiale A, s'étendant sur la circonférence du pneumatique de véhicule, qui sont séparées l'une de l'autre par une rainure circonférentielle (3), les bandes profilées (1, 2) étant délimitées dans la direction radiale R vers l'extérieur par une surface radialement extérieure (13) formant la surface de contact avec le sol et la rainure circonférentielle (3) étant délimitée radialement vers l'intérieur par une base de rainure (16) et axialement des deux côtés de la base de rainure (16) à chaque fois par une paroi de rainure, chacune des deux bandes profilées (1, 2) étant délimitée dans la direction axiale A vers la rainure circonférentielle (3) par un flanc de bande profilée (14, 15), qui forme la paroi de rainure orientée vers cette bande profilée (1, 2), des éléments de renforcement (11) en forme d'entretoise ou de nervure agencés les uns après les autres de manière répartie sur la circonférence du pneu de véhicule étant formés dans au moins un de ces flancs de bande profilée (14, 15) délimitant la rainure circonférentielle (3), qui sont reliés aussi bien dans le flanc de bande profilée (14) que dans la base de rainure (16) et qui s'étendent à partir du flanc de bande profilée (14) dans la rainure circonférentielle (3) et se terminent dans la rainure circonférentielle (3) à une distance a de l'autre flanc de bande profilée (15) délimitant la rainure circonférentielle (3), les éléments de renforcement (11) étant orientés avec leur étendue longitudinale formée à partir du flanc de bande profilée (14) jusqu'à leur extrémité d'étendue en formant un angle d'inclinaison α par rapport à la direction axiale A du pneu de véhicule,
**caractérisé en ce que**
l'étendue longitudinale des éléments de renforcement (11), formée à partir du flanc de bande profilée (14) jusqu'à leur extrémité d'étendue, comprend à chaque fois un composant de direction circonférentielle, dont l'orientation correspond à la direction de rotation D en marche avant du profil de bande de roulement associé à la direction de rotation.

2. Pneu de véhicule selon les caractéristiques de la revendication 1,
dans lequel l'élément de renforcement (11) se termine avec son étendue radiale vers l'extérieur à chaque fois à une hauteur h avec 0,4 PT ≤ h ≤ 0,8 PT radialement à l'extérieur de la base de rainure (16), PT étant la profondeur de rainure maximale.

3. Pneu de véhicule selon les caractéristiques de la revendication 1 ou 2,
dans lequel la distance a est configurée avec 0,6 B ≤ a ≤ 0,8 B, B étant la largeur de rainure de la rainure circonférentielle (3).

4. Pneu de véhicule selon les caractéristiques de l'une quelconque des revendications précédentes,
dans lequel l'élément de renforcement (11) est configuré le long de son étendue à partir du flanc de bande profilée (14) jusqu'à son extrémité d'étendue avec une longueur d'étendue b mesurée dans la direction axiale A du pneu de véhicule avec 0,2 B ≤ b ≤ 0,4 B, B étant la largeur de rainure de la rainure circonférentielle (3).

5. Pneu de véhicule selon les caractéristiques d'une ou de plusieurs des revendications précédentes,
dans lequel l'angle d'inclinaison α est configuré avec 20° ≤ α ≤ 45°, notamment avec 25° ≤ α.

6. Pneu de véhicule selon les caractéristiques d'une ou de plusieurs des revendications précédentes,
dans lequel l'élément de renforcement (11) est délimité le long de son étendue à partir du flanc de bande profilée (14) dans la direction radiale R vers l'extérieur par une surface (17), notamment plane, qui est orientée le long de la direction d'étendue principale de l'élément de renforcement (11) à partir du flanc de bande profilée (14) en formant un angle d'inclinaison β par rapport à la direction radiale R avec 10° ≤ β ≤ 80°, avec diminution continue de sa position radiale.

7. Pneu de véhicule selon les caractéristiques de la revendication 6,
dans lequel cette surface (17) délimitant l'élément de renforcement (11) radialement vers l'extérieur débouche dans la base de rainure (16) à son extrémité d'étendue éloignée du flanc de bande profilée (14).

8. Pneu de véhicule selon les caractéristiques d'une ou de plusieurs des revendications précédentes,
dans lequel les éléments de renforcement (11) du flanc de bande profilée (14, 15) sont répartis uniformément sur la circonférence du pneu.

9. Pneu de véhicule selon les caractéristiques d'une ou de plusieurs des revendications précédentes,
dans lequel de tels éléments de renforcement (12) en forme d'entretoise ou de nervure agencés les uns après les autres de manière répartie sur la circonférence du pneu de véhicule sont également formés dans le deuxième flanc de bande profilée (15) délimitant la rainure circonférentielle (3).

10. Pneu de véhicule selon les caractéristiques de la revendication 6,
dans lequel des éléments de renforcement (11) du premier flanc de bande profilée (14) et des éléments de renforcement (12) du deuxième flanc de bande profilée (15) sont agencés les uns après les autres en succession alternée le long de l'étendue circonférentielle du pneu de véhicule.
